# EUROPEAN PATENT APPLICATION

(11) **EP 4 597 393 A1**
(43) Date of publication of application: **06.08.2025**
(21) Application number: 23871178.2
(22) Date of filing: 26.09.2023
(51) Int. Cl.: G06Q 20/06, G06Q 20/36, G06Q 30/0207, G06Q 30/0251, G06Q 30/0273, G06Q 99/00

(54) **ADVERTISEMENT SYSTEM, ADVERTISEMENT METHOD, AND PROGRAM**

(30) Priority: 26.09.2022 JP 2022152117
(71) Applicant: DOOOGA TEC Pte. Ltd., Singapore 048619 (SG)
(72) Inventor: NAKADE, Tatsuhiro, Singapore (SG)
(74) Representative: Hasegawa, Kan
(86) International application number: PCT/IB2023/059499
(87) International publication number: WO 2024/069390

(57) **Abstract**

[Problem to be Solved] To provide a reward to users in response to advertisements.

[Solution to Problem] An advertising system comprising: an issuing unit that issues virtual currency; an advertisement display unit that displays an advertisement to a user who has uploaded videos; a granting unit that grants a first amount of the virtual currency to the user; and a purchasing unit that purchases a second amount of the virtual currency at a virtual currency exchange.

## Description

### [Technical Field]

The present invention relates to an advertising system, an advertising method, and a program.

### [Background Art]

Systems that distribute content together with advertisements are known.

### [Citation List]

### [Patent Literature]

[PTL1] Japanese Unexamined Patent Application Publication No. 2016-198494

### [Summary of Invention]

### [Technical Problem]

There is a demand for a method to provide appropriate rewards to users in response to advertisements.

The present invention has been made in view of such background, and an object thereof is to provide a technology that can grant rewards to users in response to advertisements.

### [Solution to Problem]

The primary invention of the present invention for solving the above problem is an advertising system comprising: an issuing unit that issues virtual currency; an advertisement display unit that displays an advertisement to a user who has uploaded videos; a granting unit that grants a first amount of the virtual currency to the user; and a purchasing unit that purchases a second amount of the virtual currency at a virtual currency exchange.

Other problems disclosed in this application and methods for solving them will be clarified by the description of embodiments and the drawings.

### [Advantageous Effects of Invention]

According to the present invention, it is possible to grant rewards to users in response to advertisements.

### [Brief Description of Drawings]

[Fig. 1] is a diagram showing an overall configuration example of an advertising system according to an embodiment of the present invention.
[Fig. 2] is a diagram showing an example of hardware configuration of a management server 2.
[Fig. 3] is a diagram showing an example of software configuration of the management server 2.
[Fig. 4] is a diagram explaining the operation of the advertising system of this embodiment.

### [Description of Embodiments]

### <System Overview>

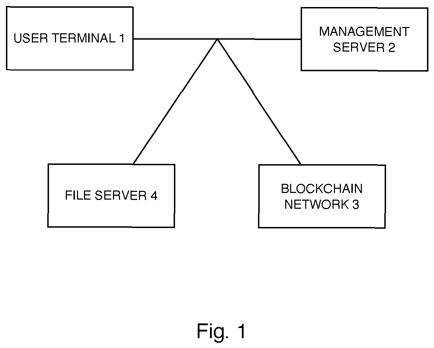

Fig. 1 is a diagram showing an overall configuration example of an advertising system according to an embodiment of the present invention. The advertising system of this embodiment includes a management server 2. The management server 2 is connected to a user terminal 1 via a communication network to enable communication. The communication network is, for example, the Internet, and is constructed by public telephone networks, mobile phone networks, wireless communication paths, Ethernet (registered trademark), etc.

The management server 2 is also connected to a blockchain network 3 to enable communication. The blockchain network 3 is composed of multiple nodes (computers) and can manage ledger data in a distributed manner. The distributed ledger is managed in a way that makes it difficult to tamper with by means of a so-called blockchain mechanism. Detailed explanation of the distributed ledger management mechanism by blockchain is omitted here as it adopts a general one. The blockchain network 3 can be constructed using, for example, Ethereum.

The user terminal 1 is a computer operated by a user who captures video images. The user terminal 1 is, for example, a smartphone. The user terminal 1 is equipped with a camera (not shown), and the user can also capture video images using the camera of the user terminal 1. The user terminal 1 may be configured to acquire data for displaying video images (video data) from other devices or memory cards. The user can send video data from the user terminal 1 to the management server 2.

The management server 2 is a computer that accepts video images. The management server 2 may be a general-purpose computer such as a workstation or personal computer, or it may be logically implemented through cloud computing. The management server 2 receives video data from the user terminal 1, displays advertisements to the user who sent the video data, and gives rewards to that user. The rewards are given through virtual currency (tokens) issued on the blockchain network 3.

### <Management Server>

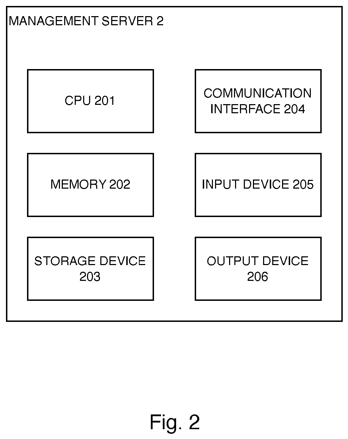

Fig. 2 is a diagram showing an example of hardware configuration of the management server 2. Note that the configuration shown is an example, and it may have other configurations. The management server 2 comprises a CPU 201, memory 202, storage device 203, communication interface 204, input device 205, and output device 206. The storage device 203 stores various data and programs, and is, for example, a hard disk drive, solid state drive, flash memory, etc. The communication interface 204 is an interface for connecting to the communication network 3, and is, for example, an adapter for connecting to Ethernet (registered trademark), a modem for connecting to a public telephone network, a wireless communication device for wireless communication, a USB (Universal Serial Bus) connector or RS232C connector for serial communication, etc. The input device 205 inputs data, and is, for example, a keyboard, mouse, touch panel, button, microphone, etc. The output device 206 outputs data, and is, for example, a display, printer, speaker, etc. Each functional part of the management server device 2 described later is realized by the CPU 201 reading and executing programs stored in the storage device 203 to the memory 202, and each storage part of the management server 2 is realized as a part of the storage area provided by the memory 202 and the storage device 203.

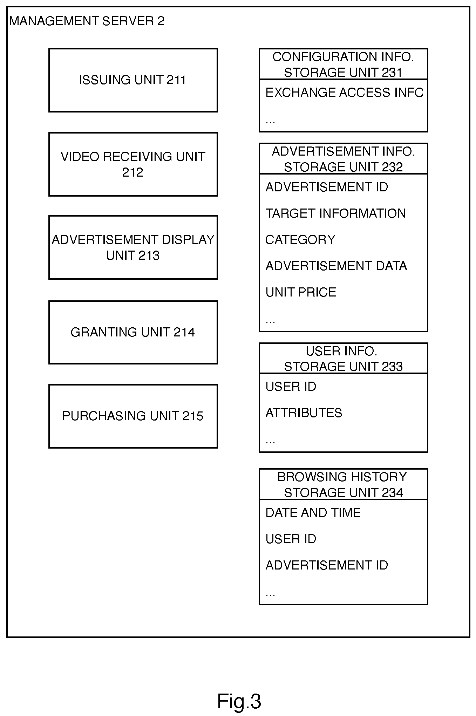

Fig. 3 is a diagram showing an example of software configuration of the management server 2. The management server 2 comprises an issuing unit 211, a video receiving unit 212, an advertisement display unit 213, a granting unit 214, a purchasing unit 215, a configuration information storage unit 231, an advertisement information storage unit 232, a user information storage unit 233, and a browsing history storage unit 234.

The issuing unit 211 issues virtual currency on the blockchain network 3. In this embodiment, it is assumed that the virtual currency is issued so as to be tradable on an exchange (not shown), in what is known as an ICO (Initial Coin Offering). The offering is not limited to an ICO, but may be an IEO (Initial Exchange Offering), IDO (Initial DEX Offering), etc., and the exchange may be a DEX (Decentralized EXchanges).

The configuration information storage unit 231 stores various configuration information. In this embodiment, the configuration information includes information such as API keys (exchange access information) for buying and selling virtual currency on the exchange where the virtual currency was issued.

The video receiving unit 212 receives video data from the user terminal 1. The video receiving unit 212 may receive information indicating video data (such as a URL) from the user terminal 1, and access the destination indicated by the received information to acquire the video data. The video receiving unit 212 can store the received video data in a file server 4, and respond to the user terminal 1 with a URL for accessing the video data managed by the file server 4. Instead of using the file server 4, the management server 2 may be equipped with a storage unit that stores video data. Alternatively, the user terminal 1 may store the video data. Also, videos may be managed in a distributed file system such as IPFS.

The video receiving unit 212 can compress the received video data before storing it in the file server 4. In this case, the advertisement described later can be provided, for example, during the compression process.

The advertisement information storage unit 232 stores information for outputting advertisements (hereinafter referred to as advertisement information). The advertisement information can include, for example, target information that identifies users targeted by the advertisement, the advertisement category, advertisement data, and unit price, all associated with an advertisement ID for identifying the advertisement. The advertisement data is data for outputting the advertisement, such as video data, still image data, audio data, etc. The unit price is the amount paid by the advertiser when the advertisement is viewed once. The advertisement information may also include constraint conditions such as the maximum number of times the advertisement can be exposed.

The user information storage unit 233 stores information related to users (hereinafter referred to as user information). The user information includes attributes of the user stored in association with a user ID that identifies the user. User attributes can include various attributes such as demographic attributes, geographic attributes, psychographic attributes, behavioral attributes, etc.

The advertisement display unit 213 displays an advertisement to a user who has uploaded videos. The advertisement display unit 213 can read user information corresponding to the user from the user information storage unit 233, search the advertisement information storage unit 232 for advertisement information targeting attributes included in the read user information, and read a predetermined number (for example, one) from among the searched advertisement information. The process of selecting a predetermined number from the searched advertisement information may be a process of randomly selecting, a process of selecting a predetermined number from those with a high degree of matching between the target information and the user's attributes, or any other process. Also, the advertisement display unit 213 can present categories included in the advertisement information to the user, accept selection of categories that the user wishes to view, and select a predetermined number from the advertisement information of the selected categories (which may be further narrowed down to those whose target information matches the user's attributes). In addition, the advertisement display unit 213 may select multiple advertisement information and display thumbnails, titles, etc., allowing the user to select advertisements they want to watch. The advertisement display unit 213 can send the advertisement data of the selected advertisement information to the user terminal 1, enabling the display of advertisements such as images based on the advertisement data on the user terminal 1.

The advertisement display unit 213 can register the history of displayed advertisements in the browsing history storage unit 234. The browsing history storage unit 234 stores the browsing history of advertisements. The browsing history includes the date and time when the advertisement was viewed (which may be the date and time when the advertisement data was sent to the user terminal 1), a user ID indicating the user, and an advertisement ID indicating the advertisement.

The granting unit 214 grants a first amount of the virtual currency to a user who has viewed an advertisement. That is, users can receive rewards by uploading video data to the management server 2 (and subsequently viewing advertisements). The granting unit 214 may grant virtual currency in response to the user watching a video advertisement until the end or for a predetermined time. The granting unit 214 can issue a transaction that transfers the first amount of virtual currency to the user's wallet.

In the blockchain network 3, proof of stake can be adopted as the consensus algorithm. In this case, staking rewards related to the virtual currency can be granted to the user in accordance with the amount of virtual currency held by the user.

The purchasing unit 215 can purchase a second amount of the virtual currency at a virtual currency exchange. By purchasing the virtual currency granted to users at the exchange on the operator's side of this advertising system, the value of the user's virtual currency can be increased. The purchasing unit 215 can execute the virtual currency purchase process using known methods with the exchange access information stored in the configuration information storage unit 231. The purchasing unit 215 assumes purchasing virtual currency with legal tender, but may also purchase using other types of virtual currency.

The purchasing unit 215 can purchase virtual currency in response to video data being uploaded from the user terminal 1 to the management server 2. Also, the purchasing unit 215 can purchase a second amount of virtual currency according to the charge amount for the advertiser of the advertisement.

### <Operation>

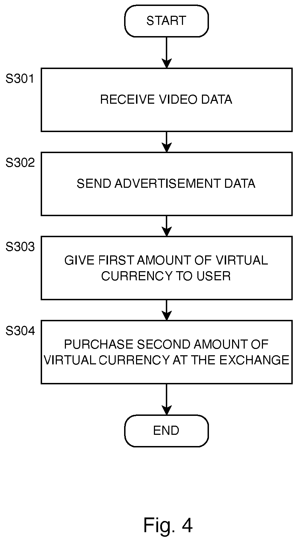

Fig. 4 is a diagram explaining the operation of the advertising system of this embodiment.

When the management server 2 receives video data from the user terminal 1 (S301), it sends advertisement data to the user terminal 1 so that advertisements are displayed on the user terminal 1 (S302). Here, the management server 2 can search for advertisement information that matches the user information attributes. Also, the management server 2 may accept specifications from the user for the conditions of advertisements they wish to view (such as category, company name, title, content, etc.), and search for advertisement information that matches the specified conditions. The management server 2 can give rewards to users for uploading videos and viewing advertisements by transferring a first amount of virtual currency to the wallet of the user who viewed the advertisement (S303).

The management server 2 performs the process of purchasing a second amount of virtual currency at the exchange (S304). The purchase of the second amount of virtual currency may be performed for each upload of video data from the user, or it may be performed asynchronously from the upload (for example, periodically). The management server 2 can, for example, determine the second amount to purchase according to the advertising fees from the advertisers.

As described above, according to the advertising system of this embodiment, rewards can be given to users who have uploaded videos. Also, since the rewards are granted through virtual currency, users can also obtain staking rewards. Furthermore, since the system side purchases virtual currency at the exchange, the value of the virtual currency granted to users can be expected to increase.

### <Second Embodiment>

In the first embodiment described above, rewards were given to users who viewed advertisements, but similar processing can also be applied to so-called affiliate-style rewards, where rewards are given to a user when a third party different from the user views advertisements on media (such as web pages) provided by the user.

That is, the management server 2 can deliver advertisements to be displayed to viewers of videos, and can grant a first amount of virtual currency to the video provider in response to viewers watching the advertisements. In this case as well, the management server 2 can purchase a second amount of virtual currency at a virtual currency exchange.

The above embodiments have been described to facilitate understanding of the present invention and are not to be interpreted as limiting the present invention. The present invention may be changed or improved without departing from its spirit, and also includes its equivalents.

For example, in this embodiment, it was assumed that compression processing would be performed on the management server 2 using a client-server method, but compression processing may also be performed on the user terminal 1.

Also, in this embodiment, it was assumed that virtual currency (first virtual currency) would be purchased using advertising fees as a source of funds, but in the case where the system side manages the balance of another type of virtual currency (second virtual currency), it may be configured to perform so-called arbitrage by comparing the price of the second virtual currency (converted to legal tender) with the price of the first virtual currency (converted to legal tender), selling the relatively expensive one and buying the relatively inexpensive one. This can be expected to raise the value of the first virtual currency when it is relatively inexpensive.

### <Disclosure Items>

This disclosure also includes the following configurations.

### [Item 1]

An advertising system comprising:
an issuing unit that issues virtual currency;
an advertisement display unit that displays an advertisement to a user who has uploaded videos;
a granting unit that grants a first amount of the virtual currency to the user; and
a purchasing unit that purchases a second amount of the virtual currency at a virtual currency exchange.

### [Item 2]

The advertising system according to item 1, wherein
the virtual currency is managed in a blockchain where consensus is formed by proof of stake, and
a staking reward related to the virtual currency is granted to the user in accordance with the amount of the virtual currency held by the user.

### [Item 3]

The advertising system according to item 1, wherein
the purchasing unit purchases the virtual currency in response to uploading of the video.

### [Item 4]

The advertising system according to item 1, wherein
the purchasing unit purchases an amount of the virtual currency

according to a charge amount for an advertiser of the advertisement.

### [Item 5]

An advertising method characterized by a computer executing:
a step of issuing virtual currency;
a step of displaying an advertisement to a user who has uploaded videos;
a step of granting a first amount of the virtual currency to the user; and
a step of purchasing a second amount of the virtual currency at a virtual currency exchange.

### [Item 6]

A program for causing a computer to execute:
a step of issuing virtual currency;
a step of displaying an advertisement to a user who has uploaded videos;
a step of granting a first amount of the virtual currency to the user; and
a step of purchasing a second amount of the virtual currency at a virtual currency exchange.

### [Reference Signs List]

1 User terminal
2 Management server
3 Blockchain network

## Claims

1. An advertising system comprising:
an issuing unit that issues virtual currency;
an advertisement display unit that displays an advertisement to a user who has uploaded videos;
a granting unit that grants a first amount of the virtual currency to the user; and
a purchasing unit that purchases a second amount of the virtual currency at a virtual currency exchange.

2. The advertising system according to claim 1, wherein
the virtual currency is managed in a blockchain where consensus is formed by proof of stake, and
a staking reward related to the virtual currency is granted to the user in accordance with the amount of the virtual currency held by the user.

3. The advertising system according to claim 1, wherein
the purchasing unit purchases the virtual currency in response to uploading of the video.

4. The advertising system according to claim 1, wherein
the purchasing unit purchases an amount of the virtual currency according to a charge amount for an advertiser of the advertisement.

5. An advertising method **characterized by** a computer executing:
a step of issuing virtual currency;
a step of displaying an advertisement to a user who has uploaded videos;
a step of granting a first amount of the virtual currency to the user; and
a step of purchasing a second amount of the virtual currency at a virtual currency exchange.

6. A program for causing a computer to execute:
a step of issuing virtual currency;
a step of displaying an advertisement to a user who has uploaded videos;
a step of granting a first amount of the virtual currency to the user; and
a step of purchasing a second amount of the virtual currency at a virtual currency exchange.
